# EUROPÄISCHE PATENTSCHRIFT

(11) **EP 1 357 295 B1**
(45) Veröffentlichungstag und Bekanntmachung des Hinweises auf die Patenterteilung: **02.08.2006**
(21) Anmeldenummer: 03006629.4
(22) Anmeldetag: 25.03.2003
(51) Int. Cl.: F04D 29/04, F04D 27/02, F04D 29/02, F04D 29/10, F01D 21/04

(54) **Verdichter in mehrstufiger Axialbauart**
Multi-stage axial flow compressor
Compresseur axial multi-étages

(30) Priorität: 25.04.2002 DE 10218459
(43) Veröffentlichungstag der Anmeldung: 29.10.2003
(73) Patentinhaber: MTU Aero Engines GmbH, 80995 München (DE)
(72) Erfinder: Albrecht, Günter, 85232 Feldgeding (DE); Tartsch, Klaus-Dieter, 86551 Aichach (DE); Tomsik, Joseph, 80799 München (DE); Wöhrl, Bernhard, Dr., 82131 Gauting (DE)

(56) Entgegenhaltungen:
- CH-A- 497 641
- DE-A- 4 429 640
- US-A- 5 400 505
- US-A- 6 009 701

## Beschreibung

Die Erfindung betrifft einen Verdichter in mehrstufiger Axialbauart mit hohem strömungsmechanischem Wirkungsgrad, gemäß dem Oberbegriff des Patentanspruchs 1.

US-A- 6 009 701 beschreibt einen fliegend gelagerten Axialverdichter, dessen Drehlagerung eine Sollbruchstelle aufweist.

US-A-5 400 505 beschreibt die verwendung von MMC (Metal Matrix Composites) bei Schaufelträgern.

Durch die spezielle, fliegende Lagerung eines Niederdruckverdichterrotors kann eintrittsseitig auf einen sogenannten Lagerstern, d.h. auf mehrere, vom Verdichtergehäuse radial zur Rotormitte führende, das vordere Wellenlager tragende Streben, verzichtet werden. Die Beschaufelung ist so konzipiert, dass auch kein statisches Vorleitgitter stromaufwärts des ersten Laufschaufelkranzes erforderlich ist. Dieses Konzept erlaubt eine Optimierung des strömungsmechanischen Wirkungsgrades und verbessert zudem die Vogelschlagfestigkeit, da rotierende Schaufelkränze einen auftreffenden Fremdkörper wie eine Vielzahl von Messerschneiden sehr schnell zerstückeln und damit die Aufprallenergie verteilen.

Im Sinne strömungsmechanischer Optimierung wird bei vorgegebenem Druckverhältnis die Stufenzahl, d.h. die Anzahl der Lauf- und Leitschaufelkränze, minimiert, d.h., mit hoher Stufenbelastung gefahren. Da Drehzahlerhöhungen aus mechanischen und anderen Gründen meist nur sehr begrenzt möglich sind, erfordert ein hoher Verdichterdurchsatz entsprechend große Kanalquerschnitte und somit relativ lange und schwere Lauf- und Leitschaufeln. Schwere Laufschaufeln wiederum benötigen besonders stabile und somit ebenfalls schwere Schaufelträger. Dort, wo aus Platzgründen nur ringförmige Schaufelträger mit geringer radialer Querschnittshöhe möglich sind, müssen diese in axialer Richtung überproportional aufgedickt werden, was zu beachtlichem Zusatzgewicht führt. Trotz der Verwendung von Titanlegierungen mit günstigem Festigkeits-/Gewichtsverhältnis für Laufschaufeln und rotierende Schaufelträger ergibt sich letztlich ein relativ schwerer Rotor. Maschinenbautechnisch werden schwere Rotoren bevorzugt beidseitig gelagert, d.h. zwischen zwei Drehlagern angeordnet. Aus den obengenannten Gründen kann jedoch eine fliegende Lagerung an einem "freien" Wellenende gewählt werden, was zu ernsthaften Problemen im Schadensfall führen kann. Tritt z.B. infolge eines Schaufelbruchs bzw. Schaufelverlustes eine starke Rotorunwucht auf, so können über das angrenzende Drehlager so hohe Radiallasten auf den Stator übertragen werden, dass die Triebwerksaufhängung bricht, mit ggf. katastrophalen Folgen für das Flugzeug.

Angesichts dieser Probleme besteht die Aufgabe der Erfindung darin, ein Verdichterkonzept mit fliegender Rotorlagerung vorzuschlagen, das bei hoher Betriebssicherheit eine Reduzierung des Rotorgewichts ermöglicht.

Diese Aufgabe wird durch die in Patentanspruch 1 gekennzeichneten Merkmale gelöst, in Verbindung mit den gattungsbildenden Merkmalen in dessen Oberbegriff. Die Erfindung schlägt vor, mindestens einen der Schaufelträger in MMC-Bauweise (Metal Matrix Composites) auszuführen, um bei gleicher Festigkeit das Gewicht gegenüber reinen Metallausführungen zu reduzieren. Dies wirkt sich dort besonders stark aus, wo aus Platzgründen nur ringförmige Schaufelträger mit kleiner radialer Querschnittshöhe möglich sind. In Kombination mit dieser gewichtssparenden MMC-Technik wird vorgeschlagen, das das rotortragende Wellenende abstützende Drehlager mit einer Sollbruchstelle zu versehen, die bei Überschreiten einer definierten Radiallast den Rotor radial begrenzt freigibt, so dass durch das Anstreifen des Rotors am Stator, verbunden mit starker Reibung, Verschleiß und Deformation, dessen durch Gewichtsreduktion bereits kleinere Rotationsenergie und Unwucht sehr schnell ggf. bis auf "Null" abgebaut werden. Eine Überlastung der Verdichter- bzw. Triebwerksaufhängung wird auf diese Weise sicher vermieden. Die letztlich erforderliche Abschaltung/Stillsetzung des Verdichters bzw. des Triebwerks ist demgegenüber tolerierbar.

In den Unteransprüchen sind bevorzugte Ausgestaltungen des Verdichters gemäß Hauptanspruch gekennzeichnet.

Die Erfindung wird anschließend anhand der Zeichnung noch näher erläutert. Dabei zeigen in vereinfachter, nicht maßstäblicher Darstellung:
Figur 1 einen Halblängsschnitt durch einen dreistufigen Verdichter in Axialbauart,
Figur 2 einen Teilschnitt durch einen Schaufelträger mit Faserverstärkung in gegenüber Figur 1 vergrößertem Maßstab,
Figur 3 ein Teilschnitt durch eine Kugelführung zur Kraftumlenkung in einer drehlagerzugeordneten Sollbruchstelle,
Figur 4 einen mit Figur 3 vergleichbaren, einen größeren Bereich erfassenden Teilschnitt nach dem Auslösen der Sollbruchstelle.

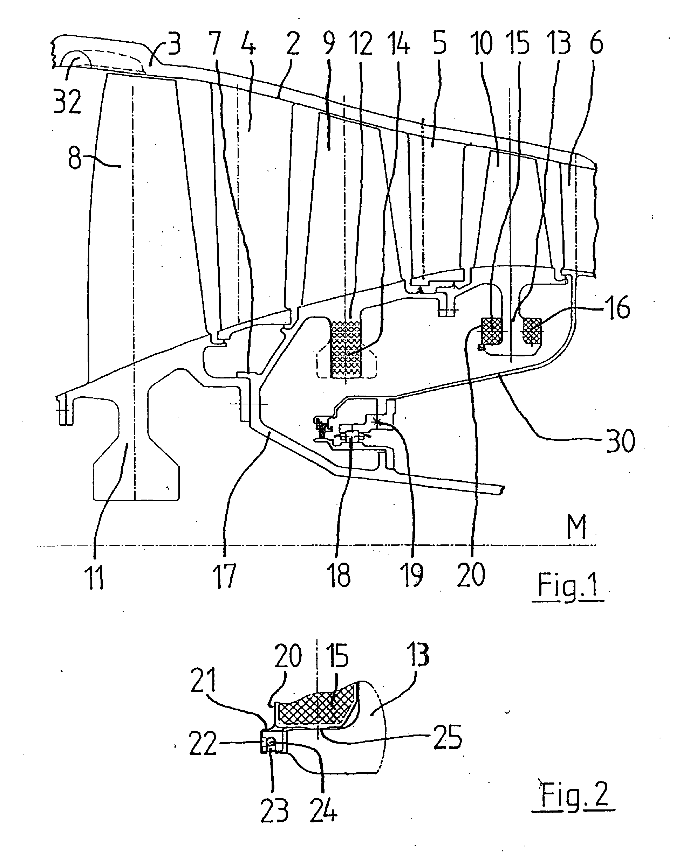

Der Stator 2 des dreistufigen Verdichters 1 gemäß Figur 1 weist ein äußeres, zumindest weitgehend rotationssymmetrisches Gehäuse 3 sowie drei Leitschaufelkränze 4,5 und 6 auf. Entsprechend besitzt der Rotor 7 drei Laufschaufelkränze 8,9 und 10 an ring- bzw. scheibenförmigen Schaufelträgern 11,12 und 13. Der Laufschaufelkranz 8 bildet das am weitesten stromaufwärts gelegene Schaufelgitter, die Strömungsrichtung im Verdichter 1 verläuft demgemäß von links nach rechts. Der Rotor 7 mit den Bauteilen 8 bis 10 und 11 bis 13 ist fliegend gelagert, d.h. mit einem über ein Drehlager 18 vorstehenden Wellenende 17 verbunden. Gemäß Darstellung bilden das Wellenende 17 und der Schaufelträger 12 eine integrale Einheit, diese könnten aber ebenso miteinander verschraubt sein. Das Drehlager 18 ist als Radiallager/Loslager ausgeführt, hier konkret als Zylinderrollenlager. Das üblicherweise mit dem Loslager zusammenwirkende, weiter stromabwärts/rechts liegende Festlager ist nicht dargestellt, da es nicht Teil der Erfindung ist. Das Drehlager 18 ist statorseitig mit einem kegelstumpfförmigen, sich in stromabwärtiger Richtung erweiternden Träger 30 verbunden, der wiederum fest mit dem hintersten Leitschaufelkranz 6 verbunden ist. Auf diese Weise ergibt sich eine relativ steife Verbindung des Drehlagers 18 zum Gehäuse 3 des Verdichters 1. Das Drehlager 18 nimmt aufgrund seiner Anordnung nahe beim oder im Schwerpunkt des Rotors 7 praktisch die gesamten, an letzterem angreifenden Radiallasten auf. Bei starken Rotorunwuchten könnten diese über den Träger 30 weitgehend in voller Stärke auf das Gehäuse 3 übertragen werden mit der Gefahr, dass die Aufhängung eines den Verdichter umfassenden Triebwerks bricht. Erfindungsgemäß ist deshalb zwischen Drehlager 18 und Träger 30 eine Sollbruchstelle 19 zwischengeschaltet, die bei Überschreiten einer definierten Radiallast den Rotor 7 begrenzt radial freigibt. Durch Anstreifen am Stator 2 wird der Rotor 7 zumindest so weit abgebremst, dass die Unwucht sehr schnell auf ein aufhängungsverträgliches Maß reduziert wird. Der dabei sehr stark beschädigte Verdichter muss in aller Regel stillgesetzt werden, das Triebwerk entsprechend abgeschaltet. Dennoch ist dies eine sehr effektive Art der Schadensbegrenzung und Sicherheitssteigerung.

Die Verbindung der Schaufeln der Laufschaufelkränze 8 bis 10 mit ihren Schaufelträgern 11 bis 13 kann konventionell formschlüssig oder integral sein, wobei die Tendenz eher zu integralen Blisk- und Bling-Ausführungen geht, wie in Figur 1 dargestellt. Der vorderste Schaufelträger 11 bildet mit seinem Laufschaufelkranz 8 eine metallische Blisk (Bladed Disk) ohne Faserverstärkung. Da die radiale Erstreckung des Schaufelträgerquerschnitts an dieser Stelle noch relativ groß sein kann, d.h. festigkeitstechnisch unproblematisch, würde eine MMC-Bauweise hier keine entscheidenden Vorteile bieten. Außerdem ist am vorderen Rotorende die Vogelschlag- bzw. FOD-Problematik (Foreign Object Damage) zu beachten, die eine, bei MMC kaum gegebene, Verformbarkeit der Bauteile notwendig macht. Anders verhält es sich beim Schaufelträger 12, der mit seinem Laufschaufelkranz 9 einen Bling (Bladed Ring) in MMC-Bauweise bildet. Bedingt durch die Anordnung radial außerhalb des Drehlagers 18, beschränken die Platzverhältnisse die radiale Querschnittshöhe des Schaufelträgers 12 gravierend, so dass hier eine MMC-Bauweise deutliche Einsparungen an Material und Gewicht erwarten lässt. Der mechanisch höchstbelastete, faserverstärkte Bereich 14 ist kreuzschraffiert dargestellt, wobei die mindestens eine, "endlose" Verstärkungsfaser in gewickelter Anordnung stoffschlüssig in das Matrixmetall integriert sein soll. Zum Vergleich ist strichpunktiert die Schaufelträgerkontur angedeutet, welche etwa ohne Faserverstärkung erforderlich wäre. Bei dieser MMC-Bauweise ist der unter hohen Zugspannungen stehende Übergangsbereich vom faserverstärkten zum nicht-faserverstärkten Werkstoff fertigungstechnisch sehr sensibel, weshalb am Beispiel des Schaufelträgers 13 zwei weitere MMC-Bauweisen erläutert werden. Bedingt durch den sich konisch erweiternden Träger 30 des Drehlagers 18, sind die Platzverhältnisse beim Schaufelträger 13 ähnlich beengt wie bei Position 12, so dass eine MMC-Bauweise auch hier Vorteile verspricht. Anhand des Schaufelträgers 13 werden zwei unterschiedliche Arten der Anbindung faserverstärkter Bereiche dargestellt, wobei pro Schaufelträger aber nur eine Art zur Anwendung kommen soll. Der Querschnitt des Schaufelträgers 13 ist im Bereich seines Innendurchmessers in beide Axialrichtungen nabenartig verlängert. Auf diesen Verlängerungen sitzen paarweise gegenüberliegend faserverstärkte Bereiche 15 oder 16. Der Bereich 16, hier nur rechts dargestellt, soll stoffschlüssig in den Schaufelträger 13 integriert sein. Der Bereich 15, hier nur links dargestellt, ist als separater Ring 20 ausgeführt und reib- sowie formschlüssig am Schaufelträger 13 fixiert. Beide Bauweisen haben den festigkeitstechnischen Vorteil, dass die ringförmigen MMC-Bereiche über die nabenartigen Verlängerungen des Schaufelträgers 13 radial von Innen unter Druckspannungen gesetzt werden, so dass praktisch keine Tendenz gegeben ist, sich voneinander zu lösen. Die Verstärkungsfasern in den Bereichen 15 und 16 werden dabei weitgehend "ideal" unter Zugspannungen gesetzt, d.h. optimal genutzt. Bei dem Bereich 16 werden an einer Stirnseite zusätzlich Schubspannungen übertragen.

Die Anbindung des separaten Ringes 20 ist in Figur 2 nochmals vergrößert dargestellt. Der druckspannungsübertragende Sitz 25 ist als definierter Presssitz ausgeführt, welcher rechnerisch für sich alleine bereits genügt, um den Ring 20 axial und tangential sicher am Schaufelträger 13 zu fixieren. Die Kontaktfläche am Ring 20 kann dabei im Sinne einer günstigen Spannungsverteilung (Hertzsche Pressung) ballig ausgeführt sein, die Kontaktfläche am Schaufelträger 13 ist zylindrisch. Als zusätzliche Sicherung ist eine formschlüssige Fixierung ergänzt. Dazu ist der Ring 20 mit über seinen Umfang verteilten Fortsätzen 21 versehen, welche in entsprechende Ausnehmungen des Schaufelträgers 13 eingreifen. Die Fortsätze 21 besitzen axial offene Nuten 22, der Schaufelträger 13 radial nach Innen offene Nuten 23, in die Sicherungselemente 24 in Gestalt von Nieten, Stiften, Drähten etc. eingesetzt sind. Anstelle der Nuten können auch - schwieriger zu fertigende - Bohrungen bzw. Kanäle vorhanden sein. Der Formschluss wirkt sowohl als zusätzliche Axialsicherung als auch als zusätzliche Verdrehsicherung. Die Bauweise mit separaten Ringen 20 in MMC-Technik hat den Vorteil, dass diese relativ einfach zu montieren und auszutauschen sind. Außerdem sind die Ringe 20 besser auf Fehlstellen zu prüfen als integrale Verbindungen. Es sei dahingestellt, ob die Einheit aus dem Schaufelträger 13 mit beidseitigen, faserverstärkten Bereichen und aus dem Laufschaufelkranz 10 als Bling oder als Blisk zu bezeichnen ist. Die Grenze zwischen diesen beiden Begriffen ist wohl nicht exakt zu definieren.

Der Laufschaufelkranz 8 der ersten Stufe ist gehäuseseitig mit einem sogenannten Casing Treatment, d.h. mit Rezirkulationskanälen 32, kombiniert, welches geeignet ist, die Verdichterstabilität zu verbessern. Eine solche Maßnahme kann auch an anderen Verdichterstufen sinnvoll sein.

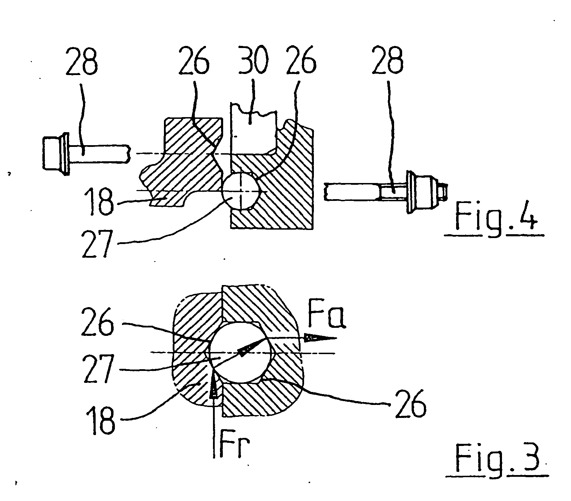

Die Figuren 3 und 4 illustrieren den Aspekt des Überlastschutzes durch eine Sollbruchstelle 19 im Bereich des Drehlagers 18. Gemäß Figur 3 und 4 werden Kugelführungen 26 benutzt, um Radiallasten Fr unter Verstärkung in Axialkräfte Fa umzulenken. Bei Überschreitung definierter Axialkräfte brechen axiale Zugschrauben 28 und geben das Drehlager 18 im Sinne einer begrenzten radialen Beweglichkeit frei.
Dabei sind mehrere Kugelführen 26 mit Kugeln 27 und mehrere Zugschrauben 28 gleichmäßig über den Umfang des Drehlagers 18 und seines Trägers 30 angeordnet. Die Führungsflächen der Kugelführungen 26 sind im dargestellten Beispiel aus einfach zu fertigenden Kegel- und Zylinderflächen zusammengesetzt. Die Kraftverstärkung ergibt sich aus dem Kegelwinkel. Natürlich sind auch andere Geometrien, z.B. mit sphärischen Bereichen, geeignet. Figur 4 zeigt den ausgelösten Zustand nach Lastüberschreitung mit gebrochenen Zugschrauben 28. Man erkennt, dass die radiale Relativverschiebung (hier vertikal) auch eine kleine axiale Relatiwerschiebung (hier horizontal) zur Folge hat, bedingt durch den Austritt der Kugeln 27 aus der Kegelfläche.

## Patentansprüche

1. Verdichter in mehrstufiger Axialbauart mit hohem strömungsmechanischem Wirkungsgrad, vorzugsweise zur Verwendung als Niederdruckverdichter einer Fluggasturbine, mit einem fliegend gelagerten, d.h. mit einem von einem Drehlager (18) vorstehenden Wellenende verbundenen Rotor (7), der mehrere Laufschaufelkränze an miteinander verbundenen, scheiben- und/oder ringförmigen Schaufelträgern (11,12,13) umfasst, und mit einer Schaufelanordnung ohne Vorleitgitter, bei der der Laufschaufelkranz der ersten Verdichterstufe das am weitesten stromaufwärts angeordnete Schaufelgitter bildet, **dadurch gekennzeichnet,**
**dass** mindestens einer (12,13) der rotierenden, scheiben- oder ringförmigen Schaufelträger (11,12,13) in MMC-Bauweise (Metal Matrix Composites), d.h. als zumindest bereichsweise faserverstärktes Metallbauteil ausgeführt ist,
**dass** das zumindest den Großteil der am Rotor (7) auftretenden Radiallasten aufnehmende Drehlager (18) eine Sollbruchstelle (19) aufweist, die bei Überschreiten einer definierten Radiallast (Fr) ein begrenztes radiales Ausweichen des Rotors (7) mit der Folge eines ggf. bis zum Stillstand drehzahlmindernden Anstreifens am Stator (2) des Verdichters (1) ermöglicht, und dass die Sollbruchstelle (19) am Drehlager (18) mit Kugelführungen (26), welche Radiallasten (Fr) unter Verstärkung in Axialkräfte (Fa) umlenken, sowie mit Zugschrauben (28), welche bei Überschreitung einer definierten Axialkraft brechen, ausgeführt ist.

2. Verdichter nach Anspruch 1, **dadurch gekennzeichnet, dass** der mindestens eine Schaufelträger (12,13) in MMC-Bauweise im faserverstärkten Bereich (14, 15, 16) eine metallische Matrix, vorzugsweise auf Titanbasis (Ti-Basis), sowie mindestens eine in Wicklungen angeordnete Langfaser aus Siliziumkarbid (SiC) aufweist.

3. Verdichter nach Anspruch 1 oder 2, **dadurch gekennzeichnet, dass** mindestens ein Schaufelträger (12) in MMC-Bauweise als ringförmiges Bauteil, insbesondere mit integraler Beschaufelung als sogenannter Bling (Bladed Ring), mit einem stoffschlüssig integrierten, faserverstärkten Bereich (14) ausgeführt ist.

4. Verdichter nach Anspruch 1 oder 2, **dadurch gekennzeichnet, dass** mindestens ein Schaufelträger (13) in MMC-Bauweise als scheibenförmiges Bauteil, insbesondere mit integraler Beschaufelung als sogenannte Blisk (Bladed Disk), mit zwei symmetrisch zur axialen Scheibenmitte angeordneten, faserverstärkten Bereichen (15, 16) ausgeführt ist, wobei die beiden faserverstärkten Bereiche (15, 16) stoffschlüssig integriert (16) oder reib- und formschlüssig befestigt (15) sind.

5. Verdichter nach einem der Ansprüche 1 bis 4, d**adurch gekennzeichnet, dass** das Drehlager (18) als Wälzlager in Radialbauart, insbesondere als Zylinderrollenlager, ausgeführt ist.

6. Verdichter nach einem der Ansprüche 1 bis 5, **dadurch gekennzeichnet, dass** das Drehlager (18) an einem kegelstumpfförmigen, sich in stromabwärtiger Richtung erweiternden sowie stromabwärts des Rotors (7) mit dem Stator (2) des Verdichters (1) verbundenen Träger (30) angeordnet ist.

7. Verdichter nach einem der Ansprüche 1 bis 6, d**adurch gekennzeichnet, dass** das Drehlager (18) zumindest auf einer Seite eine Bürstendichtung (31) aufweist.

8. Verdichter nach einem der Ansprüche 1 bis 7, **dadurch gekennzeichnet, dass** zumindest ein Laufschaufelkranz (8) des Rotors (7) mit einem sogenannten Casing Treatment, d.h. mit einer Vielzahl von gehäuseseitigen Rezirkulationskanälen (32) im Schaufelspitzenbereich, strömungstechnisch kombiniert ist.

## Claims

1. A multi-stage axial flow compressor with high fluidic efficiency, preferably for use as a low-pressure compressor of an aircraft gas turbine, with a cantilever-supported rotor (7), i.e. joined to a shaft end (17) projecting from a rotary bearing (18), the rotor comprising a plurality of rotor blade rings on disk- or ring-shaped blade carriers (11, 12, 13) joined to each other, and with a blade arrangement without a row of inlet guide vanes in which the rotor blade ring of the first compressor stage forms the blade row disposed furthest upstream, **characterised in that**
at least one (12, 13) of the rotating disk- or ring-shaped blade carriers (11, 12, 13) is executed in MMC construction (metal matrix composites), i.e. as a metal component which is fibre-reinforced in at least some areas,
**in that** the rotary bearing (18) absorbing at least the majority of the radial loads occurring on the rotor (7) has a predetermined fracture point (19) which on exceeding of a defined radial load (Fr) enables limited radial evasion of the rotor (7) resulting in speed-reducing rubbing on the stator (2) of the compressor (1) until standstill if necessary, and
**in that** the predetermined fracture point (19) on the rotary bearing (18) is designed with ball tracks (26), which redirect radial loads (Fr) under intensification into axial forces (Fa), and with tension bolts (28), which fracture on exceeding of a defined axial force.

2. A compressor according to claim 1, **characterised in that** the at least one blade carrier (12, 13) in MMC construction has a metal matrix, preferably titanium-based (Ti base), in the fibre-reinforced area (14, 15, 16) as well as at least one long fibre of silicon carbide (SiC) disposed in windings.

3. A compressor according to claim 1 or 2, **characterised in that** at least one blade carrier (12) is designed in MMC construction as a ring-shaped component, especially with integral blading as what is known as a bling (bladed ring), with a fibre-reinforced area (14) integrally bonded in.

4. A compressor according to claim 1 or 2, **characterised in that** at least one blade carrier (13) is designed in MMC construction as a disk-shaped component, especially with integral blading as what is known as a blisk (bladed disk), with two fibre-reinforced areas (15, 16) disposed symmetrically to the axial centre of the disk, whereby the two fibre-reinforced areas (15, 16) are integrally bonded in (16) or are fixed with a frictional and positive fit (15).

5. A compressor according to one of claims 1 to 4, **characterised in that** the rotary bearing (18) is designed as a radial-type roller bearing, especially as a cylindrical roller bearing.

6. A compressor according to one of claims 1 to 5, **characterised in that** the rotary bearing (18) is disposed on a truncated cone-shaped carrier (30), which expands in the downstream direction and is joined to the stator (2) of the compressor (1) downstream of the rotor (7).

7. A compressor according to one of claims 1 to 6, **characterised in that** the rotary bearing (18) has a brush seal (31) on at least one side.

8. A compressor according to one of claims 1 to 7, **characterised in that** the at least one blade ring (8) of the rotor (7) is combined fluidically with what is known as a casing treatment, i.e. with a plurality of casing-side recirculation channels (32) in the blade tip area.

## Revendications

1. Compresseur axial multi-étages avec un rendement élevé en mécanique des fluides, destiné à être utilisé de préférence sous forme de compresseur basse pression d'une turbine à gaz pour avion, comportant un rotor (7), qui est monté en porte-à-faux, c'est-à-dire relié à une extrémité d'arbre en saillie sur un palier de rotation (18), et qui comporte plusieurs couronnes d'aubes mobiles sur des supports d'aubes (11, 12, 13) en forme de disque et/ou de bague, assemblés entre eux, et comportant un ensemble d'aubes sans grille directrice d'admission, dans lequel la couronne d'aubes mobile du premier étage du compresseur forme la grille d'aubes agencée le plus en avant, **caractérisé en ce qu'**au moins l'un des supports d'aubes (11, 12, 13) rotatifs, en forme de disque ou de bague, est réalisé selon un mode de construction MMC (Metal Matrix Composites), c'est-à-dire sous forme d'élément en métal renforcé par des fibres au moins par zones, **en ce que** le palier rotatif (18), recevant au moins la plus grande partie des charges radiales générées sur le rotor (7), comporte une zone destinée à la rupture (19) qui, lors du dépassement d'une charge radiale (Fr) définie, permet une déviation radiale limitée du rotor (7) qui entraîne un frottement contre le stator (2) du compresseur (1) diminuant la vitesse de rotation, le cas échéant, jusqu'à l'arrêt, et **en ce que** la zone destinée à la rupture (19) sur le palier de rotation (18) est réalisée avec des glissières à billes (26), qui dévient les charges radiales (Fr) moyennant une augmentation des forces axiales (Fa), ainsi qu'avec des vis de traction (28) qui se cisaillent au moment du franchissement d'une force axiale définie.

2. Compresseur selon la revendication 1, **caractérisé en ce que** ledit au moins un support d'aubes (12, 13) en mode de construction MMC comporte, dans la zone (14, 15, 16) renforcée par des fibres, une matrice métallique, de préférence à base de titane (base Ti), ainsi qu'au moins une fibre longue en carbure de silicium (SiC), agencée en enroulements.

3. Compresseur selon la revendication 1 ou 2, **caractérisé en ce qu'**au moins un support d'aubes (12) en mode de construction MMC est réalisé sous forme de bague, en particulier avec un aubage intégral sous forme de bague à pales (Bladed Ring) avec une zone (14) renforcée par des fibres, intégrée par conjugaison de matière.

4. Compresseur selon la revendication 1 ou 2, **caractérisé en ce qu'**au moins un support d'aubes (13) en mode de construction MMC est réalisé sous forme de disque, en particulier avec un aubage intégral sous forme de disque à pales (Bladed Disk) avec deux zones (15, 16) renforcées par des fibres et agencées symétriquement par rapport au milieu du disque, les deux zones (15, 16) renforcées par des fibres étant intégrées (16) par conjugaison de matière ou étant fixées (15) par adhérence et par conjugaison de forme.

5. Compresseur selon l'une quelconque des revendications 1 à 4, **caractérisé en ce que** le palier de rotation (18) est conçu sous forme de palier à roulements radial, en particulier sous forme de palier à rouleaux cylindriques.

6. Compresseur selon l'une quelconque des revendications 1 à 5, **caractérisé en ce que** le palier de rotation (18) est agencé sur un support (30) tronconique, s'élargissant dans le sens aval du flux et assemblé au stator (2) du compresseur (1) en aval du rotor (7).

7. Compresseur selon l'une quelconque des revendications 1 à 6, **caractérisé en ce que** le palier de rotation (18) comporte au moins sur un côté une garniture d'étanchéité à brosses (31).

8. Compresseur selon l'une quelconque des revendications 1 à 7, **caractérisé en ce qu'**au moins une couronne d'aubes (8) du rotor (7) est combinée pour la technique d'écoulement à un traitement dit casing treatment, c'est-à-dire que la zone des extrémités supérieures des aubes est munie d'une pluralité de canaux de recirculation (32) du côté carter.
